# EUROPEAN PATENT APPLICATION

(11) **EP 3 681 228 A1**
(43) Date of publication of application: **15.07.2020**
(21) Application number: 20150432.1
(22) Date of filing: 07.01.2020
(51) Int. Cl.: H04W 72/04

(54) **METHOD OF CONFIGURING RESOURCE POOL FOR SIDELINK COMMUNICATION BY RECEIVER UE, BY TRANSMITTER UE, AND BY BASE STATION, UE USING THE SAME AND BASE STATION USING THE SAME**

(30) Priority: 10.01.2019 US 201962790478 P; 20.12.2019 US 201916721948
(71) Applicant: Industrial Technology Research Institute, Hsinchu 31040 (TW)
(72) Inventor: LIEN, Shao-Yu, 913 Pingtung County (TW); TSAI, Hua-Lung, 104 Taipei City (TW); SHEU, Chorng-Ren, 300 Hsinchu City (TW); HU, Heng-Ming, 320 Taoyuan City (TW)
(74) Representative: Becker, Eberhard

(57) **Abstract**

The disclosure is directed to a method of configuring a resource pool for SL communication by a receiver UE, by a transmitter UE, by a base station, a user equipment using the same method, and a base station using the same method. In an aspect, the disclosure is directed to a method of configuring a resource pool for SL communication by a receiver UE. The method would include not limited to: receiving an activation grant to perform SL communication; determining to modify the resource pool by changing from the first resource to a second resource of the resource pool in response to detecting a triggering condition; transmitting a first modification signal to modify from first resource to the second resource; receiving a modification grant to modify from the first resource to the second resource; and receiving a deactivation grant to terminate the SL communication.

## Description

### TECHNICAL FIELD

The disclosure is directed to a method of configuring a resource pool for sidelink (SL) communication by a sidelink receiver user equipment (SL Rx UE), a method of configuring a resource pool for SL communication by a sidelink transmitter UE (SL Tx UE), a method of configuring a resource pool for SL communication by a base station, a user equipment using the same method, and a base station using the same method.

### BACKGROUND

Previously, configuring a resource pool by means such as activation, modification, and deactivation of resources in the L1 layer has not been supported for SL communication in legacy communication systems. For the 5G communication system or the New Radio (NR), sidelink (SL) communication has evolved from to device to device (D2D) communication and ProSe communication in a previous communication system. In the future, controlling resources may be supported in SL communication.

### SUMMARY OF THE DISCLOSURE

Accordingly, the disclosure is directed to a method of configuring a resource pool for SL communication by a SL Rx UE, a method of configuring a resource pool for SL communication by a SL Tx UE, a method of configuring a resource pool for SL communication by a base station, a SL Tx user equipment and SL Rx user equipment using the same method, and a base station using the same method.

In an aspect, the disclosure is directed to a method of configuring a resource pool for SL communication by a SL Rx UE. The method would include not limited to: receiving an activation grant to perform SL communication; determining to modify the resource pool by changing from the first resource to a second resource of the resource pool in response to detecting a triggering condition; transmitting a first modification signal to modify from first resource to the second resource; receiving a modification grant to modify from the first resource to the second resource; and receiving a deactivation grant to terminate the SL communication.

In an aspect, the disclosure is directed to a method of configuring a resource pool for SL communication by a SL Tx UE. The method would include not limited to: transmitting an activation signal to activate a first resource of the resource pool for SL communication; receiving an activation grant to allow performing SL communication; transmitting a modification signal to modify from first resource to a second resource of the resource pool; determining whether to allow modifying from the first resource to the second resource in response to receiving the modification signal; receiving a modification grant to allow modifying from the first resource to the second resource; transmitting a first deactivation signal to deactivate the second resource of the resource pool for SL communication; and receiving a deactivation grant to allow terminating SL communication.

In another aspect, the disclosure is directed to a method of configuring a resource pool for SL communication by a base station. The method would include not limited to: receiving an activation signal to activate a first resource of the resource pool for SL communication; transmitting an activation grant to allow performing SL communication; receiving a modification signal to modify from first resource to a second resource of the resource pool; determining whether to allow modifying from the first resource to the second resource in response to receiving the modification signal; transmitting a modification grant to allow modifying from the first resource to the second resource; receiving a first deactivation signal to deactivate the second resource of the resource pool for SL communication; and transmitting a deactivation grant to allow terminating SL communication.

In another aspect, the disclosure is directed to a sidelink receiver user equipment which includes not limited to: a transmitter circuit, a receiver circuit, and a processor coupled to the transmitter circuit and the receiver circuit. The processor is configured at least to: receive, by using the receiver circuit, an activation grant to perform SL communication; determine to modify the resource pool by changing from the first resource to a second resource of the resource pool in response to detecting a triggering condition; transmit, by using the transmitter circuit, a first modification signal to modify from first resource to the second resource; receive, by using the receiver circuit, a modification grant to modify from the first resource to the second resource; and receive, by using the receiver circuit, a deactivation grant to terminate the SL communication.

In another aspect, the disclosure is directed to a sidelink transmitter user equipment which includes not limited to: a transmitter circuit, a receiver circuit, and a processor coupled to the transmitter circuit and the receiver circuit. The processor is configured at least to: transmit, by using the transmitter circuit, a first activation signal to activate a first resource of a resource pool for SL communication; receive, by using the receiver circuit, an activation grant to perform SL communication; determine to modify the resource pool by changing from the first resource to a second resource of the resource pool in response to detecting a triggering condition; transmit, by using the transmitter circuit, a first modification signal to modify from first resource to the second resource; receive, by using the receiver circuit, a modification grant to modify from the first resource to the second resource; transmit, by using the transmitter circuit, a first deactivation signal to deactivate the second resource of the resource pool for SL communication; and receive, by using the receiver circuit, a deactivation grant to terminate the SL communication.

In another aspect, the disclosure is directed to a base station which includes not limited to: a transmitter circuit, a receiver circuit, and a processor coupled to the transmitter circuit and the receiver circuit. The processor is configured at least to: receive, by using the receiver circuit, an activation signal to activate a first resource of a resource pool for SL communication; transmit, by using the transmitter circuit, an activation grant to allow performing SL communication; receive, by using the receiver circuit, a modification signal to modify from first resource to a second resource of the resource pool; determine whether to allow modifying from the first resource to the second resource in response to receiving the modification signal; transmit, by using the transmitter circuit, a modification grant to allow modifying from the first resource to the second resource; receive, by using the receiver circuit, a first deactivation signal to deactivate the second resource of the resource pool for SL communication; and transmit, by using the transmitter circuit, a deactivation grant to allow terminating the SL communication.

To make the features mentioned above and advantages of the present disclosure comprehensible, exemplary embodiments accompanied with figures are described in detail below. It is to be understood that both the foregoing general description and the following detailed description are exemplary, and are intended to provide further explanation of the disclosure as claimed.

It should be understood, however, that this summary may not contain all of the aspect and embodiments of the present disclosure and is therefore not meant to be limiting or restrictive in any manner. Also, the present disclosure would include improvements and modifications which are obvious to one skilled in the art.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1A illustrates a current network architecture in which SL receiver (Rx) UEs are in coverage.
FIG. 1B illustrates a current network architecture in which SL receiver (Rx) UEs are out of coverage.
FIG. 2A illustrates a scenario in which a L1 modification signal could be used in SL communication.
FIG. 2B illustrates a scenario in which a L1 modification signal could be used in SL communication to enhance coverage.
FIG. 3A is a flow chart which shows the steps of the method used by a sidelink transmitter user equipment to configure a source pool for SL communication according to one of the exemplary embodiments of the disclosure.
FIG. 3B is a flow chart which shows the steps of the method used by a sidelink receiver user equipment to configure a source pool for SL communication according to one of the exemplary embodiments of the disclosure.
FIG. 4 is a flow chart which shows the steps of the method used by a base station to configure a source pool for SL communication according to one of the exemplary embodiments of the disclosure.
FIG. 5 illustrates a block diagram of a sidelink transmitter user equipment or sidelink receiver user equipment according to one of the exemplary embodiments of the disclosure.
FIG. 6 illustrates a block diagram of a base station according to one of the exemplary embodiments of the disclosure.
FIG. 7A illustrates a gNB configuring resource pool(s) through RRC signaling when the SL Rx UE is not in coverage according to one of the exemplary embodiments of the disclosure.
FIG. 7B illustrates a gNB configuring resource pool(s) through RRC signaling when the SL Rx UE is in coverage according to one of the exemplary embodiments of the disclosure.
FIG. 8 illustrates a UE transmitting an activation signal so as to transmit SL data according to one of the exemplary embodiments of the disclosure.
FIG. 9A illustrates a gNB transmitting a grant to UEs for transmitting SL data when the SL Rx UE is out of coverage according to one of the exemplary embodiments of the disclosure.
FIG. 9B illustrates a gNB transmitting a grant to UEs for transmitting SL data when the SL Rx UE is in coverage according to one of the exemplary embodiments of the disclosure.
FIG. 10A and FIG. 10B shows a comparison between a current architecture and a proposed architecture based on the disclosure according to one of the exemplary embodiments of the disclosure.
FIG. 11A and FIG. 11B shows a comparison between a current architecture and a proposed architecture when SL Rx UEs are out of coverage according to one of the exemplary embodiments of the disclosure.
FIG. 12 shows a modification of SL resource being triggered according to one of the exemplary embodiments of the disclosure.
FIG. 13A shows a SL resource modification triggering mechanism determined by a SL Tx UE according to one of the exemplary embodiments of the disclosure.
FIG. 13B shows a SL resource modification triggering mechanism determined by a SL Rx UE according to one of the exemplary embodiments of the disclosure.
FIG. 14 shows a SL resource modification procedure according to one of the exemplary embodiments of the disclosure.
FIG. 15A shows a SL resource modification procedure determined by a SL Rx UE when the SL Rx UE is in coverage according to one of the exemplary embodiments of the disclosure.
FIG. 15B shows a SL resource modification procedure determined by a SL Rx UE when the SL Rx UE is out of coverage according to one of the exemplary embodiments of the disclosure.
FIG. 16A shows a table which contains information related to the modification signal being carried by the DCI format 0_0 according to one of the exemplary embodiments of the disclosure.
FIG. 16B shows a table which contains information related to the modification signal being carried by the DCI format 0_1 according to one of the exemplary embodiments of the disclosure.
FIG. 17A shows receiving a grant during a SL resource modification procedure when the SL Rx UE is out of coverage according to one of the exemplary embodiments of the disclosure.
FIG. 17B shows receiving a grant during a SL resource modification procedure when the SL Rx UE is in coverage according to one of the exemplary embodiments of the disclosure.
FIG. 18 shows a SL resource deactivation procedure according to one of the exemplary embodiments of the disclosure.
FIG. 19A shows receiving a grant during a SL resource deactivation procedure when the SL Rx UE is out of coverage of the gNB according to one of the exemplary embodiments of the disclosure.
FIG. 19B shows receiving a grant during a SL resource deactivation procedure when the SL Rx UE is in coverage of the gNB according to one of the exemplary embodiments of the disclosure.

### DETAILED DESCRIPTION OF DISCLOSED EMBODIMENTS

Reference will now be made in detail to the present exemplary embodiments of the disclosure, examples of which are illustrated in the accompanying drawings. Wherever possible, the same reference numbers are used in the drawings and the description to refer to the same or like parts.

In the vehicle to everything (V2X) application, configuring a resource pool may occur through the Mode 1 or Mode 2 operation, and the configuration may occur in at least one of three ways. First, the configuration of the resource pool could be based on a dynamical resource allocation scheme. Second, the configuration of the resource pool could be based on an activation / deactivation mechanism through a semi-persistent scheduling allocation scheme. Third, the configuration of the resource pool could be based on a radio resource control (RRC) (pre-)configuration scheme which would generally involve an autonomous selection of resources by a user equipment (UE) through a RRC signaling message. Configuring the resource pool through the Mode 1 operation would involve a base station scheduling a sidelink (SL) resource to be used by a UE for a SL communication. Configuring the resource pool through the Mode 2 operation would involve a UE (instead of the base station) making its own scheduling of SL communication resources within the resource pool that are configured or already pre-configured by the base station or by the network. Configuring the resource pool through the Mode 1 operation could be similar to an uplink (UL) transmission where the transmitter is a UE and the resource scheduler is a base station such as gNB or eNB.

A UL transmission without an UL grant may occur through a type 1 communication over the Uu interface based on an RRC (re)configuration without any L1 signaling. A RRC (re)configuration signaling may contain information including periodicity and offset of a resource with respect to system frame number (SFN) = 0, time domain resource allocation, frequency domain resource allocation, UE-specific demodulation reference signal (DMRS) configuration, a modulating coding scheme (MCS) or transport block size (TBS) value, a number of repetitions K, power control parameters, and etc.

A UL transmission without an UL grant may also occur through a type 2 communication over the Uu interface based on both the RRC configuration and L1 signaling to activate or deactivate UL data communication without using an UL grant. Parameters carried by an RRC (re)configuration signaling for a resource may include periodicity of a resource, power control related parameters, and so forth. Parameters carried by a L1 signaling such as a downlink control information (DCI) message may include an offset associated with the periodicity with respect to a timing reference indicated by the L1 signaling for activation, time domain resource allocation, frequency domain resource allocation, UE specific DMRS configuration, an MCS or TBS value, and so forth.

For a SL transmission, a unicast, a groupcast, or a broadcast could be supported in the New Radio (NR) V2X application. For UEs that are already RRC connected, only one SL bandwidth part (BWP) could be active in a carrier as no signaling is exchanged in a SL for activation and deactivation of the SL BWP. Only one SL BWP could be configured in a carrier for a UE which supports the NR V2X application. For advanced use cases of V2X over the Uu interface, the NR may support having multiple active UL configured grants in a given BWP of a given cell.

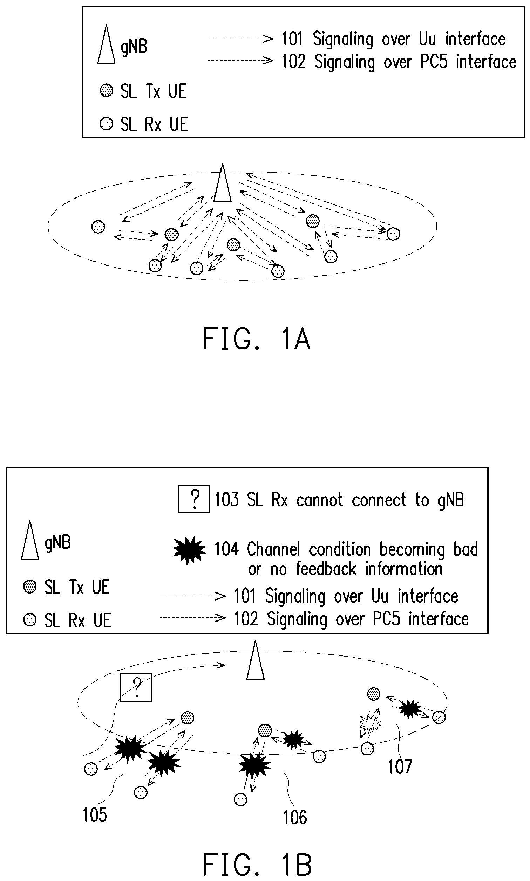

FIG. 1A illustrates a current network architecture in which SL receiver (Rx) UEs are in coverage. According to FIG. 1A, each UE is configured by the gNB over a signaling message transmitted over the Uu interface 101, and signaling messages are exchanged between SL transmitter (Tx) UEs and SL Rx UEs over the PC5 interface 102.

FIG. 1B illustrates a current network architecture in which SL receiver (Rx) UEs are out of coverage. In one of the scenarios 105, both UEs could be out of coverage so that the channel conditions are bad or contain no feedback information 104and each of the UEs cannot connect to the gNB 103. In one of the scenarios 106, one of the UEs could be out of coverage and the other UE could be at the cell edge so that the channel conditions for both UEs are bad or contains no feedback information 104and each of the UEs cannot connect to the gNB. In one of the scenarios 107, both of the UEs could be at the cell edge so that the channel conditions for both UEs are bad or contains no feedback information 104and each of the UEs cannot connect to the gNB 103.

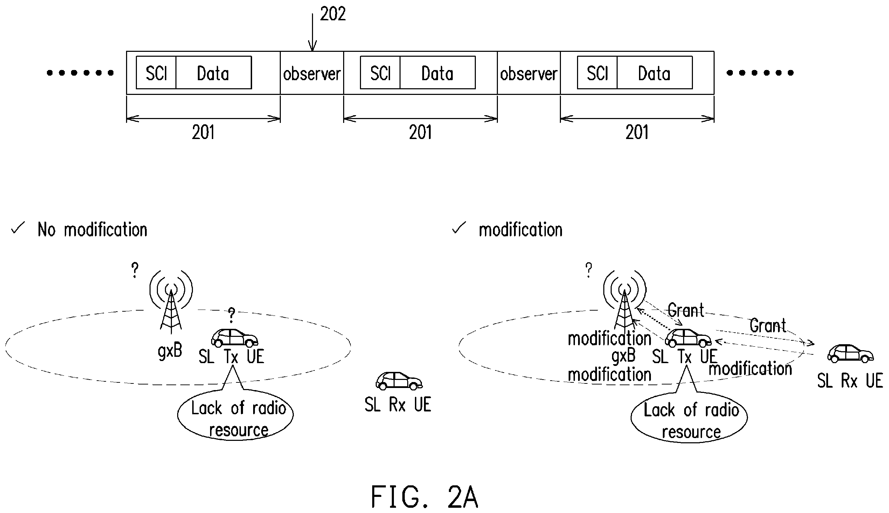

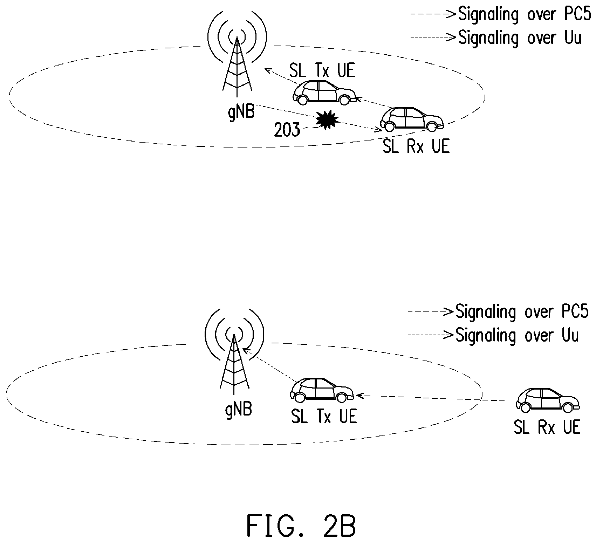

To cope with the UEs being out of coverage, a L1 (i.e. physical layer) signaling could be used to extend the scope of the gNB's coverage and to update the resource configuration of SL communication more frequently. FIG. 2A illustrates a scenario in which a L1 modification signal could be used in SL communication. As shown in FIG. 2A, if a UE (e.g. vehicle) is between two short-term sensing windows 201, there could be a lack of radio resource being triggered. For instance, if a vehicle just happens to exit a coverage area during a time point 202 which is between two short-term sensing windows 201, there would not be any trigger being detected in order to modify the current resource configuration. However, according to FIG. 2B, assuming that the L1 signaling is used, then the configuration of resources for SL communication could be updated more frequently as the L1 signaling is aperiodic and is not bounded by the short-term sensing windows 201. When the SL Rx UE 203 is at the cell edge, a modification of the current resource configuration could be triggered so that the SL Tx UE may still communicate with the SL Rx UE through a SL. It could be seen that even though L1 signaling would be able to modify the current resource configuration quickly; however, there has not been any established mechanism to configure a resource pool for SL communication in order to quickly cope with changes to coverage statuses of UEs.

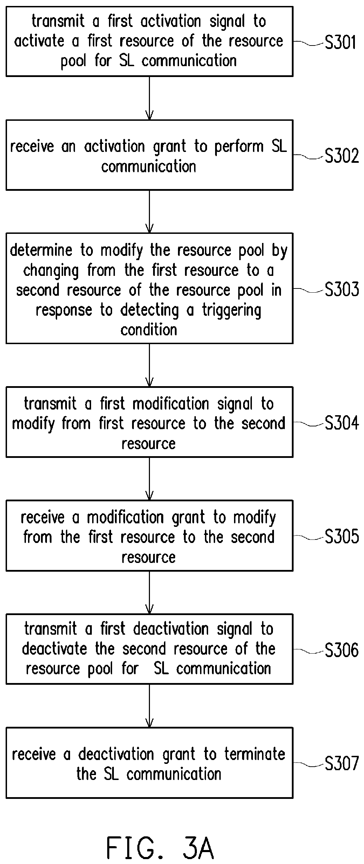

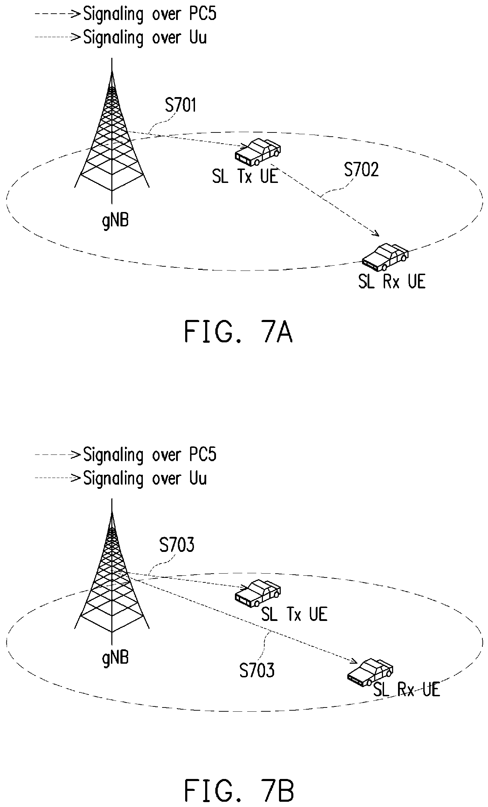

The disclosure provides a mechanism by which a user equipment (UE) would be able to access a resource for performing a sidelink (SL) communication with another UE. The mechanism provided in this disclosure would support the Mode 1 operation as previously described to configure a resource pool for SL communication. Also, the configuration of the resource pool of the disclosure is similar to an activation / deactivation based mechanism under semi-persistent scheduling scheme as previously described. The mechanism includes a sidelink transmitter UE (SL Tx UE) being able to activate, modify, and deactivate a configured resource pool for SL communication, a sidelink receiver UE (SL Rx UE) being able to modify and deactivate a configured resource pool for SL communication, and a gNB which would follow a resource access scheme to grant the activation, the modification, and the deactivation of the configured resource pool for the UE. Both a SL Tx UE or a SL Rx UE would be able to initiate a modification of a configured resource (e.g. switch channel) of a resource pool and to determine which resource to switch to in response to detecting a triggering condition. The gNB would then either agree or disagree with the UE's request for modification. In this disclosure, a UE, or a SL Tx UE, or a SL Rx UE is assumed to be capable of performing SL communication and may function as a transmitting UE (or transmitter UE) and/or a receiving UE(or receiver UE). FIG. 3A ∼ FIG. 7B and their corresponding written descriptions provide the concepts of the disclosure.

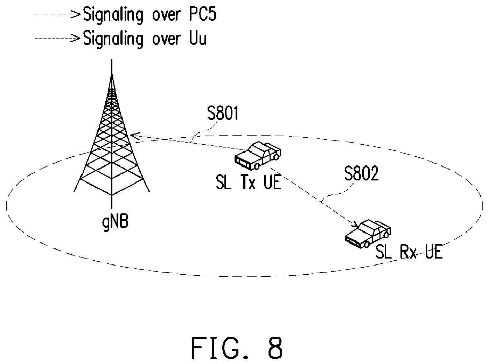

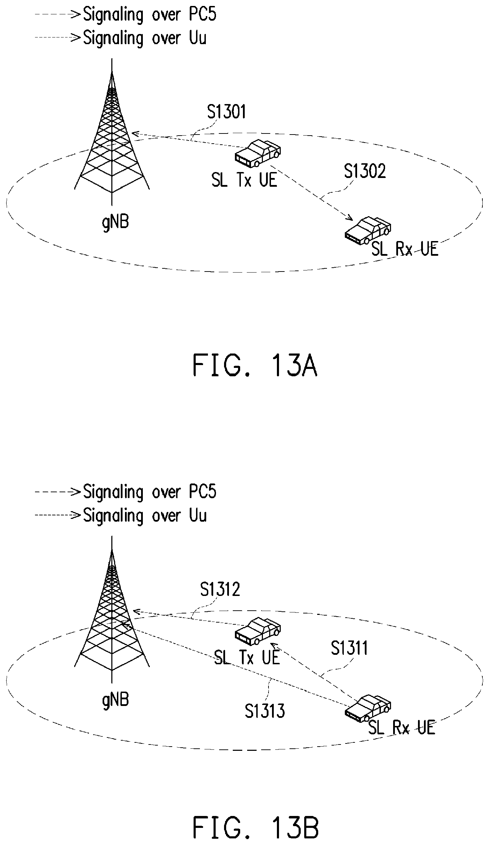

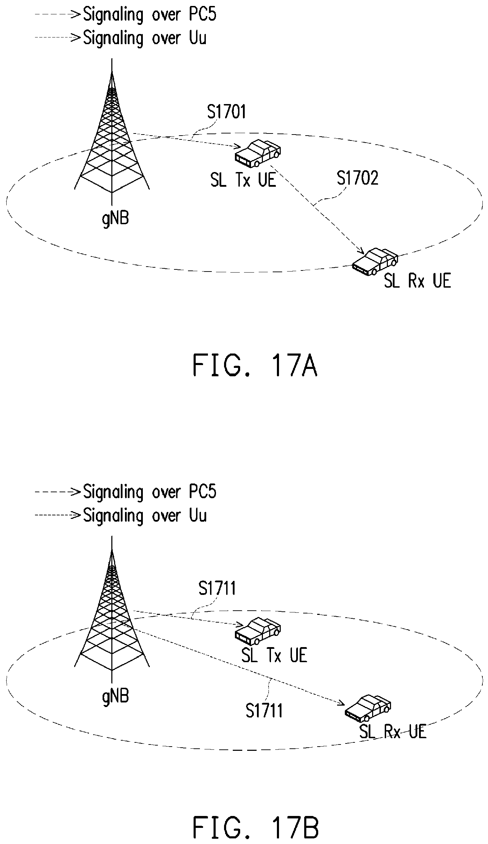

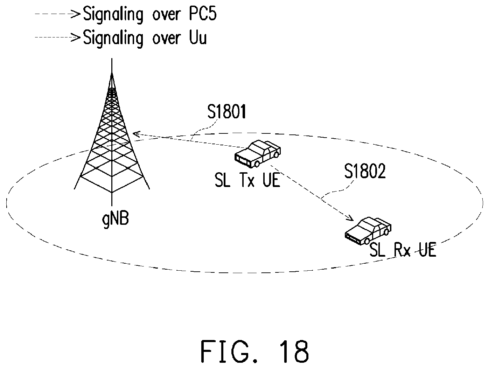

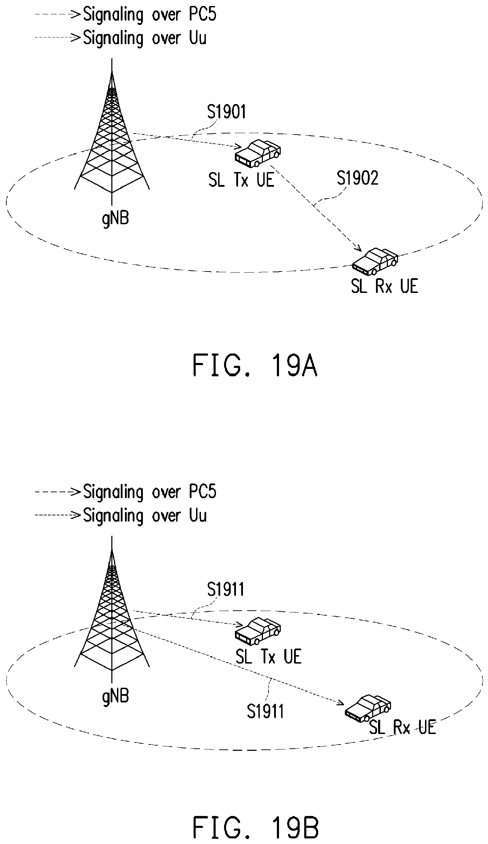

FIG. 3A is a flow chart which shows the steps of the method used by a SL Tx UE to configure a source pool for SL communication according to one of the exemplary embodiments of the disclosure. In step S301, the SL Tx UE would transmit a first activation signal (e.g. S801 in FIG. 8) to activate a first resource of the resource pool for SL communication. In step S302, the SL Tx UE would receive an activation grant to perform SL communication. In step S303, the SL Tx UE would determine to modify the resource pool by changing from the first resource to a second resource of the resource pool in response to detecting a triggering condition. In step S304, the SL Tx UE would transmit a first modification signal (e.g. S1301 in FIG. 13A) to modify from the first resource to the second resource. In step S305, the SL Tx UE would receive a modification grant (e.g. S1701 in FIG. 17A) to modify from the first resource to the second resource. In step S306, the SL Tx UE would transmit a first deactivation signal (e.g. S1801 in FIG. 18) to deactivate the second resource of the resource pool for SL communication. In step S307, the SL Tx UE would receive a deactivating grant (e.g. 1901 in FIG. 19A) to terminate the SL communication.

In short, a UE could be configured to decide to use a particular resource (e.g. first resource), which could be a channel, a BWP, or etc., for SL communication by transmitting an activation signal to a gNB. In response to detecting a triggering condition which may indicate that the first resource is not suitable at the moment, the UE may make its own decision (instead of the gNB) to switch from the first resource to a second resource by transmitting a modification signal. The UE may also decide to terminate the SL communication by transmitting a deactivation signal. In response to receiving the activation signal, the modification signal, or the deactivation signal, the gNB may allow the activation, the modification, or the deactivation by transmitting a corresponding grant.

According to an exemplary embodiment, transmitting the first activation signal may include transmitting the first activation signal to a base station by using a first interface (e.g. Uu interface) via an activation indicator as a scheduling request carried in a shared channel (e.g. Physical Uplink Shared Channel, (PUSCH)). The Uu interface is for communication between base station and SL Tx UE/SL Rx UE. Additionally, the SL Tx UE may also transmit a second activation signal (e.g. S802 in FIG. 8) to a SL Rx UE by using a second interface (e.g. PC5) via a SL control information like (e.g. SCI_like) carried in a SL control channel (e.g. Physical Sidelink Control Channel (PSCCH)) or a SL shared channel (e.g. Physical Sidelink Shared Channel (PSSCH)). SCI_like is information which is transmitted from a UE to another UE and can be transmitted through a control channel (e.g. PSCCH) or a shared channel (e.g. PSSCH). The SL Tx UE may receive an activation grant from the base station carried in a downlink control information (DCI) through a control channel (e.g. Physical Downlink Control Channel, (PDCCH)). The SL Tx UE may perform the SL communication with another peer device (e.g. SL Rx UE) only after receiving the activation grant. According to an exemplary embodiment, the first interface and the second interface are different physical layer interfaces.

According to an exemplary embodiment, the triggering condition may include a capacity of the first resource being below a required capacity of the SL communication, or a channel state information (CSI) associated with the first resource being below a quality of service (QoS) threshold. The required capacity of the SL communication could be obtained from the buffer status report (BSR) and UE assistance information via a higher layer signal from SL Tx UE. When the channel status becomes bad, the CSI associated with the first resource may be below the QoS threshold. The SL Tx UE might, according to not receiving a feedback acknowledgement from the SL RX UE or receiving one or more negative acknowledgement (NAK) from the SL RX UE, determine that the CSI associated with the first resource is below the QoS threshold.

According to an exemplary embodiment, transmitting the first modification signal (e.g. 1301 in FIG. 13A) to the base station may include using a first interface via a modification indicator as a scheduling request carried in a shared channel (e.g. PUSCH). The SL Tx UE may also transmit a second modification signal to the SL Rx UE (e.g. 1302 in FIG. 13A) by using a second interface via a SL control information like (e.g. SCI_like) carried in a SL control channel (e.g. PSCCH) or a SL shared channel (e.g. PSSCH). The SL Tx UE may receive a modification grant (e.g. S1701 in FIG. 17A) carried in a downlink control information (DCI) like (e.g. DCI_like) through a control channel (e.g. PDCCH) or a shared channel, and the SL Tx UE would modify from the first resource to the second resource only after receiving the modification grant. DCI_like is information which is transmitted from a base station to a UE and can be transmitted through a control channel (e.g. PDCCH) or a shared channel (e.g. PDSCH). The modification indicator may include a time domain resource allocation, a frequency domain resource allocation, a modulation coding scheme (MCS), a transport block size (TBS), a transmit power control (TPC) parameter, or a precoding information and number of layer.

According to an exemplary embodiment, the SL Tx UE may transmit a deactivation signal (e.g. S1801 in FIG. 18) in a deactivation indicator for BSR carried in a shared channel (e.g. PUSCH) by using a first interface (e.g. Uu interface). In addition, the SL Tx UE may also transmit to the SL Rx UE a second deactivation signal (e.g. 1802 in FIG. 18) by using a second interface (e.g. PC5) via a SL control information like (e.g. SCI_like) carried in a SL control channel (e.g. PSCCH) or a SL shared channel (e.g. PSSCH). The SL Tx UE may receive a deactivation grant from the base station carried in a downlink control information (DCI) through a control channel (e.g. PDCCH) and subsequently terminate the SL communication in response to receiving the deactivation grant.

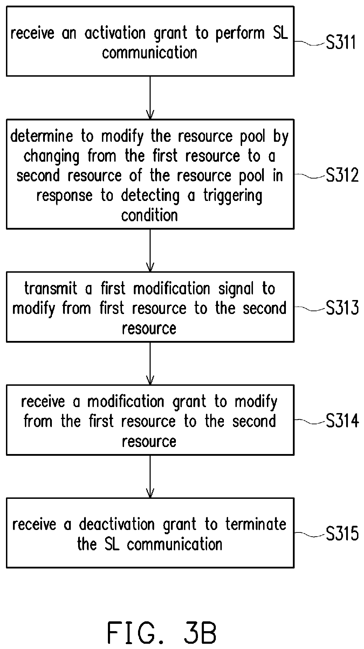

The above described UE may also function as a receiver UE (e.g. Rx UE). FIG. 3B is a flow chart which shows the steps of the method used by a SL Rx UE to configure a source pool for SL communication according to one of the exemplary embodiments of the disclosure. According to an exemplary embodiment, in step S311, the SL Rx UE may receive an activation grant (e.g. 901) to perform SL communication. In step S312, the SL Rx UE may determine to modify the resource pool by changing from the first resource to a second resource of the resource pool in response to detecting a triggering condition. In step S313, the SL Rx UE may transmit a first modification signal (e.g. S1313 in FIG. 13B) to modify from first resource to the second resource. In step S314, the SL Rx UE may receive a modification grant (e.g. 1711 in FIG. 17B) to modify from the first resource to the second resource. In step S315, the SL Rx UE may receive a deactivation grant (e.g. S1911 in FIG. 19B) to terminate the SL communication.

According to an exemplary embodiment, the SL Rx UE may determine whether the SL Rx UE is within a cell coverage. The UE may receive the activation grant from the base station carried in a downlink control information (DCI) through a control channel when the UE is within the cell coverage or receive the activation grant from the SL transmitter UE carried in a sidelink control information (SCI) through a SL control channel when the UE is out of cell coverage. The trigger condition may include a capacity of the first resource being below a required capacity of the SL communication, or a channel state information (CSI) associated with the first resource being below a quality of service (QoS) threshold. The required capacity of the SL communication could be obtained from a BSR and UE assistance information via a SL transmitter UE. When the channel status becomes bad, the CSI associated with the first resource may be below the QoS threshold. The SL Rx UE might, according to being unable to decode or demodulate one or more signals from the first resource, determine that the CSI associated with the first resource is below the QoS threshold.

According to an exemplary embodiment, the SL Rx UE may determine whether the SL Rx UE is within a cell coverage. The SL Rx UE transmits the first modification signal to the base station by using a first interface (e.g. Uu interface) via a modification indicator as a scheduling request carried in a shared channel when the SL Rx UE is within the cell coverage. When the SL Rx UE is out of cell coverage, the SL Rx UE transmits a second modification signal to the SL Tx UE by using a second interface via a SL control information _like (SCI_like) carried in a SL control channel or a SL shared channel, and the SL Tx UE forwards the second modification signal from the SL transmitter UE to the base station by using the first interface via an another modification indicator as a scheduling request carried in a shared channel.

According to an exemplary embodiment, the SL Rx UE may determine whether the SL Rx UE is within a cell coverage. The SL Rx UE receives the modification grant from the base station carried in a downlink control information like (DCI_like) through a control channel or a shared channel when the SL Rx UE is within the cell coverage. The SL Rx UE receives the modification grant from the SL Tx UE carried in a sidelink control information like (SCI_like) through a SL control channel or a SL shared channel when the SL Rx UE is out of cell coverage.

According to an exemplary embodiment, the SL Rx UE may determine whether the SL Rx UE is within a cell coverage. The SL Rx UE may receive the deactivation grant from the base station carried in a DCI through a control channel when the SL Rx UE is within the cell coverage, and the SL Rx UE may receive the deactivation grant from the SL transmitter UE carried in a sidelink control information (SCI) through a SL control channel when the SL Rx UE is out of cell coverage.

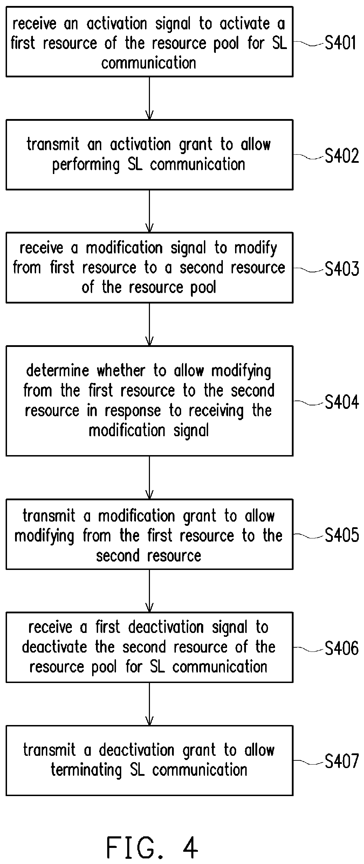

FIG. 4 is a flow chart which shows the steps of the method used by a base station to configure a source pool for SL communication according to one of the exemplary embodiments of the disclosure. In step S401, the base station would receive an activation signal (e.g. S801 in FIG. 8) to activate a first resource of the resource pool for SL communication. In step S402, the base station would transmit an activation grant to allow performing the SL communication. In step S403, the base station would receive a modification signal (e.g. S1301 in FIG. 13A) to modify from first resource to a second resource of the resource pool. In step S404, the base station would determine whether to allow modifying from the first resource to the second resource in response to receiving the modification signal. In step S405, the base station would transmit a modification grant (e.g. 1701 in FIG. 17A) to allow modifying from the first resource to the second resource. In step S406, the base station would receive a deactivation signal (e.g. S1801 in FIG. 18) to deactivate the second resource of the resource pool for SL communication. In step S407, the base station would transmit a deactivation grant to allow terminating the SL communication.

According to an exemplary embodiment, receiving the activation signal would include receiving the activation signal from a SL transmitter UE by using an interface (e.g. L1 interface such as Uu interface) via an activation indicator as a scheduling request carried in a shared channel (e.g. PUSCH). In response to receiving the activation signal, the base station would determine whether to allow the SL communication in the first resource and transmit an activation grant carried in a DCI to a SL transmitter UE or to a SL receiver UE through a control channel (e.g. PDCCH) after having determined to allow the SL communication in the first resource.

According to an exemplary embodiment, when receiving the modification signal via a modification indicator from a SL transmitter UE or a SL receiver UE as a scheduling request carried in a shared channel (e.g. PUSCH), the base station would determine whether to allow the modification from first resource to a second resource of the resource pool. The base station would transmit a modification grant carried in a DCI_like (e.g. DCI_like) through a control channel (e.g. PDCCH) or a shared channel after the base station has determined to allow the modification from first resource to a second resource of the resource pool.

According to an exemplary embodiment, when receiving the deactivation signal from a SL transmitter UE in a deactivation indicator for BSR carried in a shared channel, the base station may determine whether to allow the deactivation of the SL communication. The base station may transmit a deactivation grant (e.g. 1901 in FIG.19A) carried in a downlink control information (DCI) to a SL transmitter UE or a SL receiver UL through a control channel in response to having decided to deactivate the SL communication.

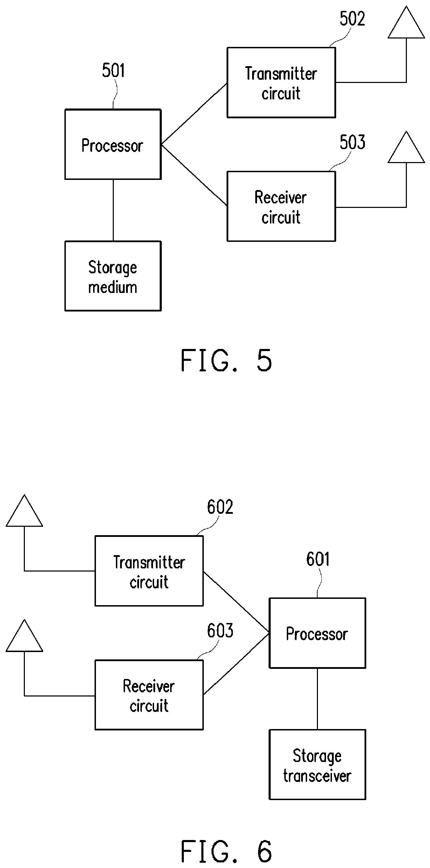

FIG. 5 illustrates a block diagram of a SL transmitter (Tx) user equipment (UE) or a SL receiver (Rx) UE according to one of the exemplary embodiments of the disclosure. The SL Tx UE or the SL Rx UE would include not limited to a processor 501 electrically connected to a transmitter circuit 502, a receiver circuit 503, and a non-transitory storage medium. The processor 501 is configured at least for implementing the method used by a SL Tx UE and/or a SL Rx UE to configure a source pool for SL communication as described in FIG. 3A and/or FIG. 3B as well as its exemplary embodiments and alternative variations.

The transmitter circuit 502 may include one or more transmitting circuits, and the receiver circuit 503 may include one or more receiving circuits configured to transmit and receive signals respectively in the radio frequency or in the mmWave frequency. The transmitter circuit 502 and receiver circuit 503 may also perform operations such as low noise amplifying, impedance matching, frequency mixing, up or down frequency conversion, filtering, amplifying, and so forth. The transmitter circuit 502 and receiver circuit 503 may each include one or more digital-to-analog (D/A) converters or analog-to-digital (A/D) converters which are configured to convert from a digital signal format to an analog format during uplink signal processing or from an analog format to a digital format during downlink signal processing. The transmitter circuit 502 and receiver circuit 503 may each include an antenna array which may include one or multiple antennas to transmit and receive omni-directional antenna beams or directional antenna beams.

The non-transitory storage medium would store programming codes, codebook configurations, buffered data, and/or record configurations assigned by the processor 501. The processor 501 could be implemented by using programmable units such as a micro-processor, a micro-controller, a DSP chips, FPGA, etc. The functions of the processor 501 may also be implemented with separate electronic devices or ICs. It should be noted that the functions of the processor 501 may be implemented with either hardware or software.

FIG. 6 illustrates a block diagram of a base station according to one of the exemplary embodiments of the disclosure. The base station would include not limited to a processor 601 electrically connected to a transmitter circuit 602, a receiver circuit 603, and a non-transitory storage transceiver. The base station 601 is configured at least for implementing the method used by a base station to configure a source pool for SL communication as described in FIG. 4 as well as its exemplary embodiments and alternative variations.

The transmitter circuit 602 may include one or more transmitting circuits, and the receiver circuit 603 may include one or more receiving circuits configured to transmit and receive signals respectively in the radio frequency or in the mmWave frequency. The transmitter circuit 602 and receiver circuit 603 may also perform operations such as low noise amplifying, impedance matching, frequency mixing, up or down frequency conversion, filtering, amplifying, and so forth. The transmitter circuit 602 and receiver circuit 603 may each include one or more digital-to-analog (D/A) converters or analog-to-digital (A/D) converters which are configured to convert from a digital signal format to an analog signal format during uplink signal processing or from an analog signal format to a digital signal format during downlink signal processing. The transmitter circuit 602 and receiver circuit 603 may each include an antenna array which may include one or multiple antennas to transmit and receive omni-directional antenna beams or directional antenna beams.

The non-transitory storage transceiver would store programming codes, codebook configurations, buffered data, and/or record configurations assigned by the processor 601. The hardware processor 601 could be implemented by using programmable units such as a micro-processor, a micro-controller, a DSP chips, FPGA, etc. The functions of the processor 601 may also be implemented with separate electronic devices or ICs. It should be noted that the functions of the processor 601 may be implemented with either hardware or software.

To further elucidate the above described concepts, FIG. 7A ∼ FIG. 19B provide various exemplary embodiments and examples. FIG. 7A shows a gNB configuring for SL transmission resource pools through RRC signaling when a SL Rx UE is out of coverage of the gNB and FIG. 7B illustrates the gNB configuring resource pools for SL transmission through RRC signaling when the SL Rx UE is in coverage of the gNB. Throughout the disclosure, being out of coverage may include being partially in coverage that the strength of the received signals from gNB is smaller than a pre-configured threshold or being totally out of coverage that the signals from gNB cannot be received. For the exemplary embodiments of FIG. 7A and FIG. 7B, the gNB would first configure resource pools for SL communication of the SL Tx UE and the SL Rx UE through information carried in RRC messages. In general, when the SL Rx UE is out of coverage of the gNB, the SL Tx UE would relay the information carried in the RRC message to the SL Rx UE. Otherwise if Rx UE is in the coverage of the gNB, then both the SL Tx UE and the SL Rx UE would receive RRC messages from the gNB directly.

Further, it is worth noting that in all embodiments of the disclosure, communications between the gNB and UEs would occur in a pre-configured resource pool, and SL communication among UEs (e.g. SL Tx UE, SL Rx UE) would occur in a different pre-configured resource pool. A resource pool may refer to a group of resources in terms of time domain or frequency domain which could be allocated to serve a dedicated purpose. In particular, a resource pool could be a group of continuous or discontinuous BWPs which would typically be known by the gNB and the UEs beforehand. For example, transmissions between the gNB and UEs (e.g. SL Tx UE, SL Rx UE) would occur in a first resource pool, and transmissions between the SL Tx UE and the SL Rx UE would occur in a second resource pool. The first resource pool is different from the second resource pool, and the first resource pool and the second resource pool would contain non-overlapping BWPs.

Referring to FIG. 7A, in step S701, the gNB would transmit a RRC signaling by using a first interface to the SL Tx UE to configure a resource pool for SL communication which is between the SL Tx UE and the SL Rx UE. In other words, the gNB would inform the SL Tx UE and the SL Rx UE which resource within the resource pool the SL Tx UE and the SL Rx UE may use for SL communication. The first interface is a L1 layer interface which could be the Uu interface. The RRC signaling may also indicate a resource within the Uu interface that the resource could be used for transmitting some specific signals with important information to gNB, where the specific signals could be an activation signal, a modification signal, or a deactivation signal. The RRC signaling could be transmitted to a SL Tx UE via a system information block (SIB) in a physical downlink shared channel (PDSCH). Since the SL Rx UE is out of coverage of the gNB, in step S702, the SL Tx UE would forward the RRC signaling to the SL Rx UE via a Sidelink Control Information (SCI) in a physical sidelink control channel (PSCCH) by using a second interface which could be the PC5 interface.

Referring to FIG. 7B, since both SL Tx UE and the SL Rx UE are in coverage of the gNB, in step S703, both the SL Tx UE and the SL Rx UE would receive from the gNB the RRC signaling which carries the configuration of the resource pool of the SL communication for both the SL Tx UE and the SL Rx UE via a SIB in a PDSCH.

After the resource pool for SL communication has been configured as previously described, before any user data is communicated between the SL Tx UE and the SL Rx UE, the SL Tx UE would transmit an activation signal to both the gNB and the SL Rx UE. FIG. 8 shows the Tx UE transmitting an activation signal to both the gNB and the SL Rx so as to transmit SL data. In step S801, the SL Tx UE would transmit an activation signal to the gNB via an activation indicator for scheduling request (SR) carried in the PUSCH by using the first interface which could be the Uu interface. In step S802, the SL Tx UE would transmit an activation signal via SCI_like information (SCI_like, i.e., a similar control information) carried in PSCCH or PSSCH by using the second interface which could be the PC5 interface to the SL Rx UE. The activation signal could be carried by an activation indicator as a scheduling request in the PUSCH. The uplink resource for the SL Rx UE to transmit the activation indicator could be configured or pre-configured through the RRC signaling by the gNB. The activation signal transmitted from the SL Tx UE to the SL Rx UE by using the PC5 interface could be carried via the SCI_like or a similar control information in PSCCH or PSSCH.

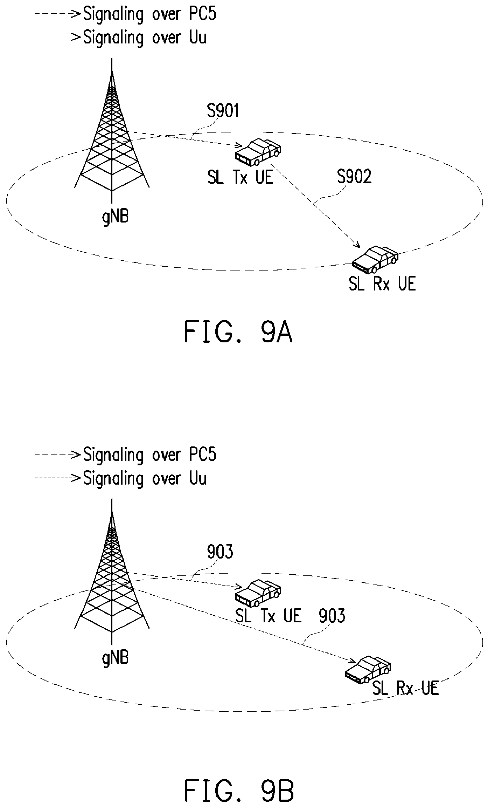

After transmitting an activation signal, the SL Tx UE and the SL Rx UE may commence SL communication and transmit SL data after both the SL Tx UE and the SL Rx UE receive a grant from the gNB. FIG. 9A shows a gNB transmitting a grant to the SL Tx UE for transmitting SL data when the SL Rx UE is out of coverage of the gNB and FIG. 9B illustrates transmitting a grant to both the SL Tx UE and the SL Rx UE when the SL Rx UE is in coverage of the gNB. Referring to FIG. 9A, in step S901, the gNB would transmit to the SL Tx UE by using the Uu interface a grant via downlink control information (DCI) in physical downlink control channel (PDCCH) which would carry the granted transmission scheme. In step S902, the SL Tx UE would forward to the SL Rx UE by using the PC5 interface the grant via SCI in PSCCH to indicate the granted transmission scheme of the associated PSSCH. Referring to FIG. 9B, in step S903, the gNB would transmit to the both SL Tx UE and the SL Rx UE by using the Uu interface a grant via DCI in PDCCH which would carry the granted transmission scheme.

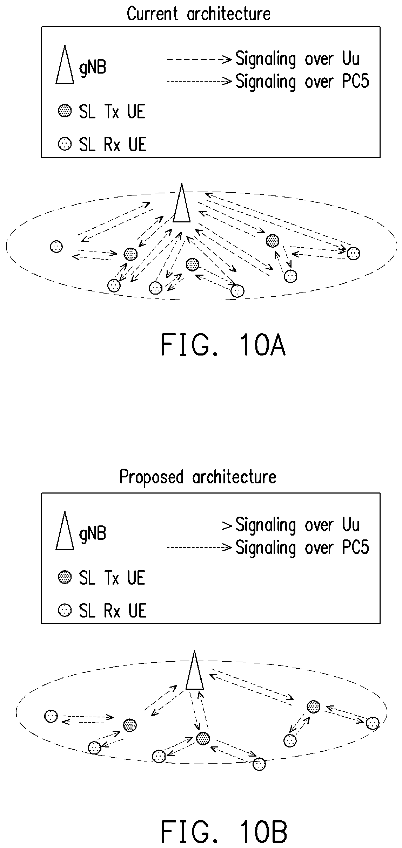

FIG. 10A and FIG. 10B shows a comparison between a current architecture which is shown in FIG. 10A and a proposed architecture according to one embodiment of the disclosure which in FIG. 10B. In comparison to the current architecture, the proposed architecture would require significantly less signaling overhead by the gNB when the SL Rx UEs are in coverage of the gNB, where the SL Rx UEs communicate to the gNB through the SL Tx UEs in the proposed architecture.

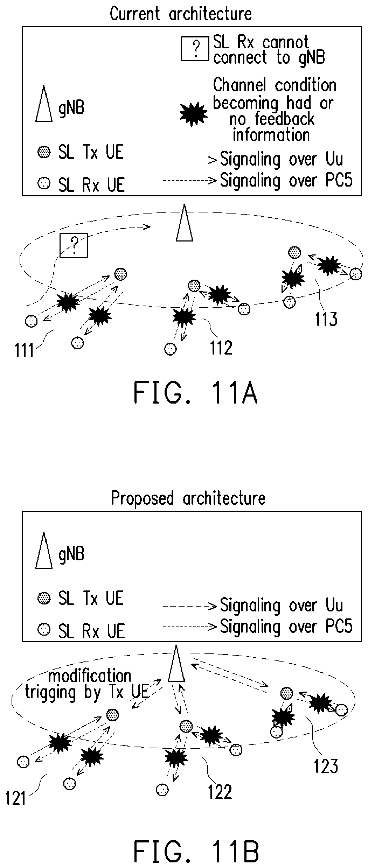

FIG. 11A and FIG. 11B shows a comparison between a current architecture which is shown in FIG. 11A and a proposed architecture according to one embodiment of the disclosure which in FIG. 11B. As shown in FIG. 11A, for the current architecture, the gNB cannot monitor SL channel status for the circumstances including both the two SL Rx UEs are out of coverage 111, one of the two SL Rx UEs is out of the coverage and the other one is at the cell edge 112, or when both the two SL Rx UEs are at the cell edge 113. Also when the SL Rx UEs cannot connect to the gNB due to not being in coverage, adverse channel conditions, or not receiving feedback information, the gNB may not be able to configure or modify the resource pool for SL communication between the SL Tx UE and the SL Rx UE. For the proposed architecture which is FIG. 11B, the gNB transmits signaling to the SL Tx UE which could forward the signal from the gNB to the SL Rx UE which could be under circumstances 121, 122, 123 which are the same as the circumstances 111, 112, 113. Therefore, the coverage range could be extended, and the signaling overhead could be reduced, and the resource pool for SL communication between the SL Tx UE and the SL Rx UE could be configured and modified.

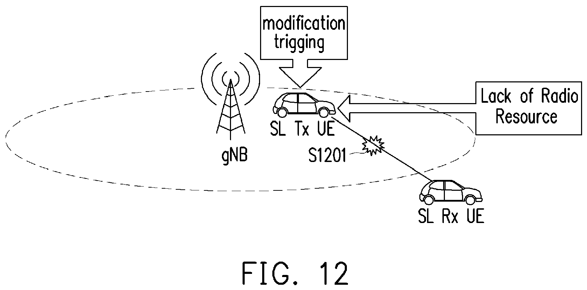

As previously described, after receiving a grant from the gNB, the SL UEs may engage in SL communication. However, after the resource pool for SL communication has been configured, the channel state information among the SL UEs may fluctuate. Thus, the configured resource may need to be modified on a dynamic basis. Therefore, a mechanism to modify an existing resource of the resource pool such as from a first resource pool to a second resource pool for SL communication is provided. FIG. 12 shows a modification of SL resource being triggered (S1201) as the SL Rx UE moves outside of the coverage of the gNB. Even under normal circumstance, the required resources of SL communication may change dynamically since the allocated resources at any instant might become insufficient in the cases that the traffic is periodic or aperiodic. Also, the SL channel status may fluctuate as the current modulation and coding scheme (MCS) and power control scheme might not be appropriate at all times. Therefore, the modification mechanism could be triggered based on a triggering condition, and the details of the modification triggering mechanism is provided as follows.

The modification triggering mechanism may include two cases. For the first case, the SL resource modification triggering mechanism is determined by the SL Tx UE. For the second case, the SL resource modification triggering mechanism is determined by the SL Rx UE. FIG. 13A shows a SL resource modification triggering mechanism of the first case. The resource modification triggering mechanism includes detecting the triggering condition and a subsequent signaling procedure. The triggering condition could be based on a buffer status report (BSR) and UE assistance information received by the SL Tx UE via a high(er) layer signaling as the SL Tx UE may know the resource status and the traffic pattern information including information related to periodicity, timing offset, message size, quality of service (QoS), and etc. Once the SL Tx UE has determined that the current resource may no longer be sufficient, the SL Tx UE may trigger the signaling procedure of resource modification. Also, the triggering condition could be based on the Tx UE receiving one or more NAKs (negative acknowledgement) from a SL Rx UE over a pre-configured time window. When one or more NAKs are received or not receiving a feedback acknowledgement from the SL Rx UE, the SL Tx UE may trigger the signaling procedure of resource modification.

Referring to FIG. 13A, assuming that the triggering condition has been met, in step S1301, the SL Tx UE would transmit to the gNB a modification signal by using the Uu interface via a modification indicator for SR carried in PUSCH. In step S1302, the SL Tx UE would also transmit to the SL Rx UE a modification signal by using the PC5 interface via a SCI_like or a similar control channel carried in the PSCCH or PSSCH.

FIG. 13B shows a SL resource modification triggering mechanism for the second case. The resource modification triggering mechanism also includes detecting the triggering condition and a subsequent signaling procedure. The triggering condition could be based on a buffer status report (BSR) and UE assistance information received from the SL Tx UE via a high(er) layer signaling of the SL Tx UE as the SL Rx UE may know the resource status and the traffic pattern information including information related to periodicity, timing offset, message size, quality of service (QoS), and etc. Once the SL Rx UE has determined that the current resource may no longer be sufficient, the SL Rx UE may trigger the signaling procedure of resource modification. Also, the triggering condition could be based on the SL Rx UE not being able to demodulate or decode data of SL communication sent from the SL Tx UE for a predetermined time. Once the triggering condition has been met, the SL Rx UE would determine that the SL channel status becomes bad and thus trigger the signaling procedure of resource modification.

Referring to FIG. 13B, after the triggering condition has been met, assuming that the SL Rx UE is in coverage of the gNB, then in step S1313, the Rx UE would transmit to the gNB directly a modification signal by using the Uu interface via a modification indicator for SR carried in PUSCH. However, assuming that the SL Rx UE is out of the coverage of the gNB, then in step S1311, the SL Rx UE would transmit to the SL Tx UE a modification signal by using the PC5 interface via a SCI_like carried in the PSCCH or PSSCH. And in step S1312, the SL Tx UE would forward the modification signal received from the SL Rx UE to the gNB by using the Uu interface via a modification indicator for SR carried in PUSCH.

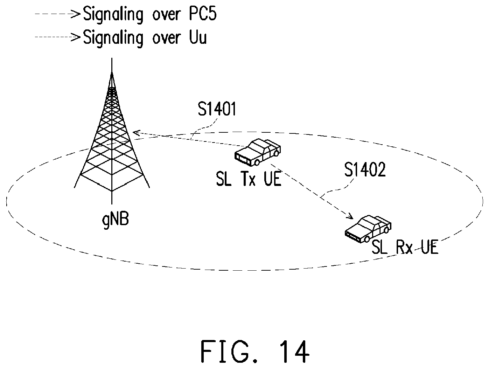

FIG. 14 ∼ FIG. 17B and their corresponding written descriptions describe the modification mechanism in further details. After a resource pool has been configured and activated for SL communication, a SL Tx UE may modify the configuration as in the first case which was previously described after a triggering condition has been met. FIG. 14 shows such SL resource modification procedure of the first case. In step S1401, the SL Tx UE would transmit to the gNB by using the Uu interface a modification signal carried by a modification indicator as a SR in PUSCH. In step S1402, the SL Tx UE would transmit to the SL Rx UE by using the PC5 interface a modification signal carried by the SCI_like in PSCCH or PSSCH.

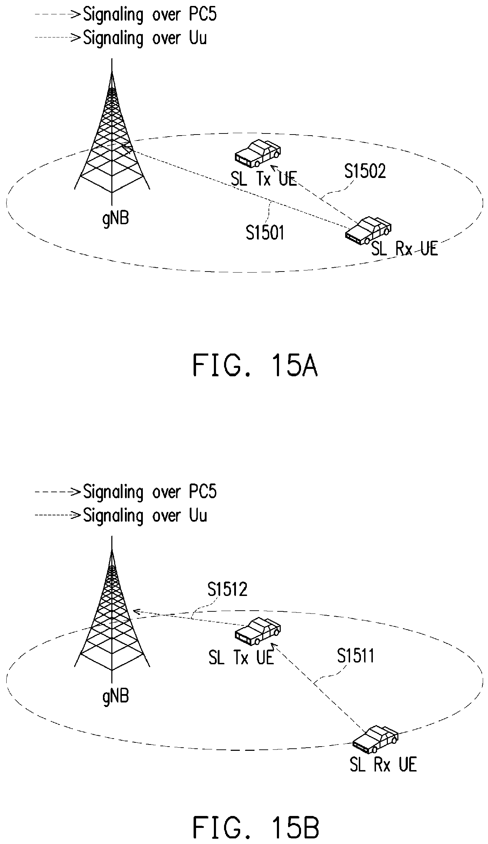

FIG. 15A shows a SL resource modification procedure for the second case when the SL Rx UE is in coverage of the gNB, and FIG. 15B shows a SL resource modification procedure for the second case when the SL Rx UE is out of coverage of the gNB. Referring to FIG. 15A, after a resource pool has been configured and activated for SL communication, a SL Rx UE may modify the configuration after a triggering condition has been met. In step S 1501, the SL Rx UE would transmit to the gNB by using the Uu interface a modification signal carried by a modification indicator as a SR in PUSCH. The UL resource used to transmit the modification indicator of step S1501 could be configured or preconfigured through the RRC signaling by the gNB. The RRC signaling may indicate a resource within the Uu interface that the resource could be used activation, modification or deactivation for SL communication. In step S1502, the SL Rx UE would transmit to the SL Tx UE by using the PC5 interface a modification signal carried by the SCI_like in PSCCH or PSSCH. The SL resource used to transmit the modification signal of step S1502 could be configured or preconfigured by the gNB.

Referring to FIG. 15B, in step S1511, the Rx UE would transmit to the SL Tx UE by using the PC5 interface a modification signal carried by the SCI_like in PSCCH or PSSCH. The SL resource used to transmit the modification signal of step S1511 could be configured or preconfigured by the gNB. In step S1512, the SL Tx UE would forward to the gNB by using the Uu interface the modification signal carried a modification indicator as a SR in PUSCH. The UL resource used to transmit the modification indicator of step S1512 could be configured or preconfigured through the RRC signaling.

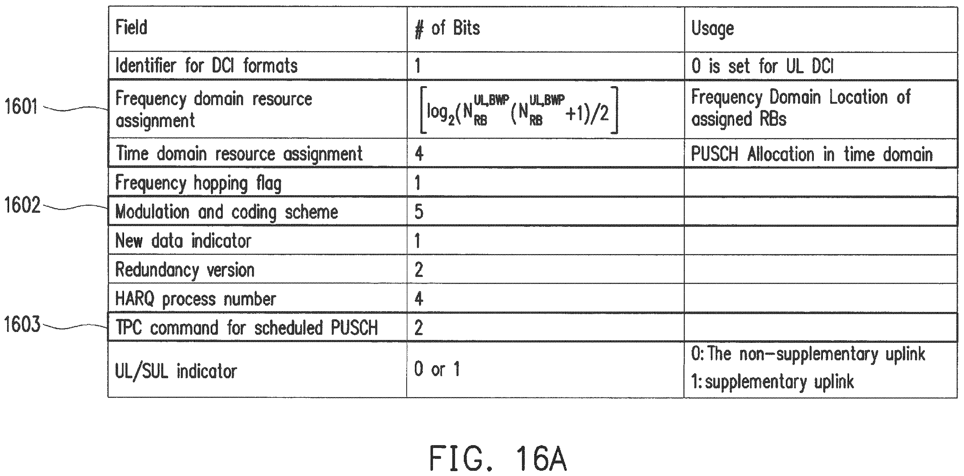

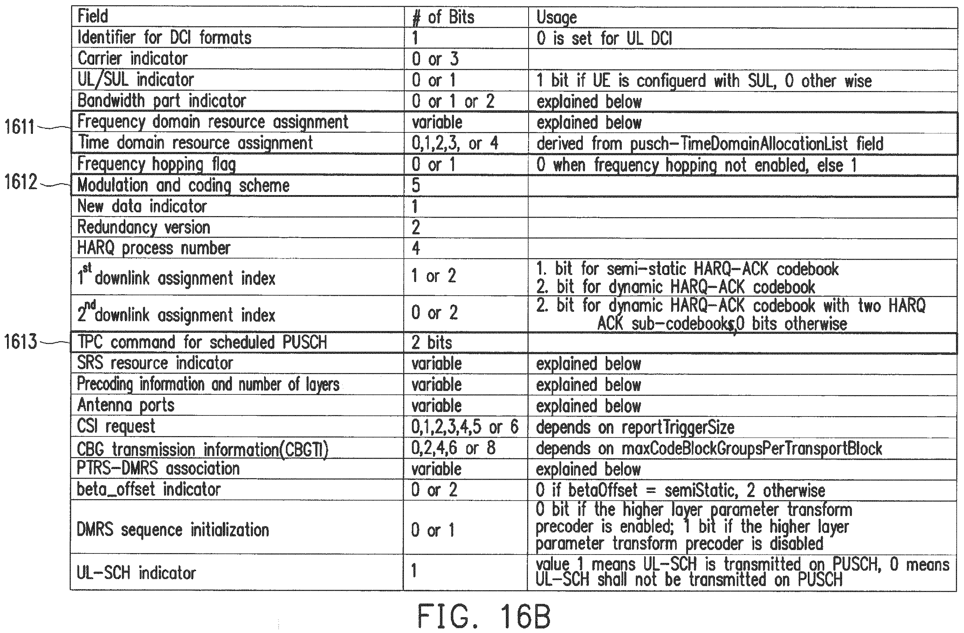

FIG. 16A shows a table which contains information related to the modification signal being carried by the DCI format 0_0 according to one of the exemplary embodiments of the disclosure. The relevant information may include the frequency domain resource assignment and the time domain resource assignment 1601, the MCS 1602, and the transmit power control (TPC) 1603. FIG. 16B is table which contains information related to the modification signal being carried by DCI format 0_1 according to one of the exemplary embodiments of the disclosure. The relevant information may include the frequency domain resource assignment and the time domain resource assignment 1611, the MCS 1612, and the TPC command for scheduled PUSCH 1613. As shown by the tables of FIG. 16A and FIG. 16B, for both the first case and the second case, modification signal would carry at least information including a time domain resource allocation, a frequency domain resource allocation, an MCS or TBS value, power control related parameters such as (TPC command for scheduled PSSCH), and/or precoding information and number of layer. These information could be carried by a modification indicator in PUSCH and a SCI_like in PSCCH or PSSCH.

FIG. 17A shows receiving a grant during a SL resource modification procedure when the SL Rx UE is out of coverage of the gNB, and FIG. 17B shows receiving a grant during a SL resource modification procedure when the SL Rx UE is in coverage of the gNB. In general, for both the first case and the second case, a SL Tx UE may perform SL communication with the SL Rx UE only after a grant from the gNB has been received. Referring to FIG. 17A, in step S1701, the gNB would transmit to the SL Tx UE by using the Uu interface a grant which is transmitted in a DCI_like via PDCCH or PDSCH. Since the Rx UE is assumed to be out of coverage of the gNB, then in step S1702, the SL Tx UE would forward to the SL Rx UE by using the PC5 interface the grant which is transmitted through the SCI_like via PSCCH or PSSCH. Referring to FIG. 17B, since the SL Rx UE is assumed to be in coverage of the gNB, then in step S1711, the gNB would transmit to both the SL Rx UE and the SL Tx UE by using the Uu interface the grant which is transmitted in a DCI_like via PDCCH or PDSCH. Relative to a shared channel, a control channel has a higher ability to protect information but has a lesser number of bits used. In both cases, the SL Tx UE may need to send a PSCCH to the SL Rx UE to indicate the transmission scheme of the associated PSSCH.

After a resource pool has been configured and activated for SL communication, a SL Tx UE may deactivate the configuration by transmitting a deactivation signal to gNB as shown in FIG. 18. In step S1801, the SL Tx UE would transmit to the gNB by using the Uu interface a deactivation signal carried by a deactivation indicator for buffer status report (BSR) in PUSCH. In step S1802, the Tx UE would transmit to the Rx UE by using the PC5 interface a deactivation signal carried by the SCI_like in PSCCH or PSSCH. The resource for the SL Tx UE to transmit the deactivation signal could be configured or pre-configured by the gNB.

FIG. 19A shows receiving a grant during a SL resource deactivation procedure when the SL Rx UE is out of coverage of the gNB, and FIG. 19B shows receiving a grant during a SL resource deactivation procedure when the SL Rx UE is in coverage of the gNB. In general, both the SL Tx UE and the SL Rx UE may terminate the SL communication by transmitting a deactivation signal, and the termination can be granted by the gNB when the gNB transmits a grant to the SL Rx UE and the SL Tx UE through DCI. For example, after the gNB transmits a modification grant to modify from the first resource to the second resource, the SL Tx UE may transmit a deactivation signal to deactivate the second resource of the resource pool for the SL communication. Referring to FIG. 19A, in step S1901, the gNB would transmit to the Tx UE by using the Uu interface a grant which is transmitted in a DCI PDSCH. Since the SL Rx UE is assumed to be out of coverage, in step S 1902, the SL Tx UE would forward to the SL Rx UE by using the PC5 interface the grant which is transmitted through the SCIl via PSCCH. Referring to FIG. 19B, since the SL Rx UE is assumed to be in coverage of the gNB, then in step S1911, the gNB would transmit to both the SL Rx UE and the SL Tx UE by using the Uu interface the grant which is transmitted in a DCI via PDCCH.

In view of the aforementioned descriptions, the present disclosure is suitable for being used in a 5G wireless communication system and beyond and is able to activate, modify, and/or deactivate a resource for SL communication by using an activation / deactivation based mechanism under a semi-persistent scheduling scheme. In this way, a UE would be able to cope with a change of condition to modify the current resource for SL communication and at the same time save signaling overhead by not using the dynamic resource allocation scheme.

No element, act, or instruction used in the detailed description of disclosed embodiments of the present application should be construed as absolutely critical or essential to the present disclosure unless explicitly described as such. Also, as used herein, each of the indefinite articles "a" and "an" could include more than one item. If only one item is intended, the terms "a single" or similar languages would be used. Furthermore, the terms "any of' followed by a listing of a plurality of items and/or a plurality of categories of items, as used herein, are intended to include "any of', "any combination of', "any multiple of', and/or "any combination of multiples of the items and/or the categories of items, individually or in conjunction with other items and/or other categories of items. Further, as used herein, the term "set" is intended to include any number of items, including zero. Further, as used herein, the term "number" is intended to include any number, including zero.

In view of the foregoing, it is intended that the disclosure cover modifications and variations of this disclosure provided they fall within the scope of the following claims and their equivalents.

## Claims

1. A method used by a sidelink (SL) transmitter user equipment (UE) to configure a resource pool for SL communication, the method comprising:
transmitting a first activation signal to activate a first resource of the resource pool for SL communication (S301);
receiving an activation grant to perform SL communication (S302);
transmitting a first deactivation signal to deactivate a second resource of the resource pool for SL communication (S306); and
receiving a deactivation grant to terminate the SL communication (S307);
**characterized by**
determining to modify the resource pool by changing from the first resource to the second resource of the resource pool in response to detecting a triggering condition (S303);
transmitting a first modification signal to modify from first resource to the second resource (S304); and
receiving a modification grant to modify from the first resource to the second resource (S305).

2. The method of claim 1, wherein transmitting the first activation signal comprising:
transmitting the first activation signal (S801) to a base station by using a first interface via an activation indicator as a scheduling request (SR) carried in a shared channel.

3. The method of claim 2, further comprising:
receiving the activation grant (S901) from the base station carried in a downlink control information (DCI) through a control channel; and
performing the SL communication only after receiving the activation grant.

4. The method of claim 2, further comprising:
transmitting a second activation signal (S802) to a SL receiver UE by using a second interface via a SL control information like (SCI_like) carried in a SL control channel or a SL shared channel.

5. The method of claim 4, wherein the first interface and the second interface are different physical layer interfaces.

6. The method of claim 1, wherein the triggering condition comprising:
a capacity of the first resource being below a required capacity of the SL communication; and
a channel state information (CSI) associated with the first resource being below a quality of service (QoS) threshold.

7. The method of claim 6, wherein the required capacity of the SL communication is obtained from a buffer status report (BSR) and a UE assistance information via high layer signaling, and the CSI associated with the first resource being below the QoS threshold is determined according to not receiving a feedback acknowledgement from a SL receiver UE or receiving one or more negative acknowledgement from the SL receiver UE.

8. The method of claim 1, wherein transmitting the first modification signal comprising:
transmitting the first modification signal (S1301) to a base station by using a first interface via a modification indicator as a SR carried in a shared channel.

9. The method of claim 8, wherein transmitting the first modification signal further comprising:
transmitting a second modification signal (S1302) to a SL receiver UE by using a second interface via a SL control information like (SCI_like) carried in a SL control channel or a SL shared channel.

10. The method of claim 8, further comprising:
receiving the modification grant (S1701) from the base station carried in a downlink control information (DCI) like (DCI_like) through a control channel or the shared channel, and
modifying from the first resource to the second resource only after receiving the modification grant.

11. The method of claim 8, wherein the modification indicator comprising:
a time domain resource allocation;
a frequency domain resource allocation;
a modulation coding scheme (MCS) or a transport block size (TBS);
a transmit power control (TPC) parameter; or
a precoding information and a number of layer.

12. The method of claim 1, wherein transmitting the first deactivation signal comprising:
transmitting the first deactivation signal (S1801) to a base station by using a first interface via a deactivation indicator for a buffer status report (BSR) carried in a shared channel.

13. The method of claim 12, further comprising:
transmitting a second deactivation signal (S1802) to a SL receiver UE by using a second interface via a SL control information like (SCI_like) carried in a SL control channel or a SL shared channel.

14. The method of claim 12, further comprising:
receiving the deactivation grant (S1901) from the base station carried in a DCI through a control channel; and
terminating the SL communication in response to receiving the deactivation grant.

15. A method used by a sidelink (SL) receiver user equipment (UE) to configure a resource pool for SL communication, the method comprising:
receiving an activation grant to perform SL communication at a first resource of the resource pool (S311); and
receiving a deactivation grant to terminate the SL communication at a second resource of the resource pool (S315);
**characterized by**
determining to modify the resource pool by changing from the first resource to the second resource of the resource pool in response to detecting a triggering condition (S312);
transmitting a first modification signal to modify from first resource to the second resource (S313); and
receiving a modification grant to modify from the first resource to the second resource (S314).

16. The method of claim 15, further comprising:
determining whether the SL receiver UE is within a cell coverage; and
receiving the activation grant (S903) from a base station carried in a downlink control information (DCI) through a control channel when the SL receiver UE is within the cell coverage, or receiving the activation grant from a SL transmitter UE (S902) carried in a sidelink control information (SCI) through a SL control channel when the SL receiver UE is outside the cell coverage.

17. The method of claim 15, wherein the triggering condition comprising:
a capacity of the first resource being below a required capacity of the SL communication; and
a channel state information (CSI) associated with the first resource being below a quality of service (QoS) threshold.

18. The method of claim 17, wherein the required capacity of the SL communication is obtained from a buffer status report (BSR) and a UE assistance information via a SL transmitter UE; and the CSI associated being with the first resource below the QoS threshold is determined according to the SL receiver UE being unable to decode or demodulate one or more signals from the first resource.

19. The method of claim 15, further comprising:
determining whether the SL receiver UE is within a cell coverage; and
transmitting the first modification signal (S1313) to a base station by using a first interface via a modification indicator as a scheduling request (SR) carried in a shared channel when the SL receiver UE is within the cell coverage, or transmitting a second modification signal (S1311), which is for a SL transmitter UE to forward the second modification signal to the base station by using the first interface via an another modification indicator as the SR carried in the shared channel, to the SL transmitter UE by using a second interface via a SL control information like (SCI_like) carried in a SL control channel or a SL shared channel when the SL receiver UE is outside the cell coverage.

20. The method of claim 15, further comprising:
determining whether the SL receiver UE is within a cell coverage; and
receiving the modification grant (S1711) from a base station carried in a downlink control information (DCI) like (DCI_like) through a control channel or a shared channel when the SL receiver UE is within the cell coverage, or receiving the modification grant (S1702) from a SL transmitter UE carried in a SL control information like (SCI_like) through a SL control channel or a SL shared channel when the SL receiver UE is outside the cell coverage.

21. The method of claim 15, further comprising:
determining whether the SL receiver UE is within a cell coverage; and
receiving the deactivation grant (S1911) from a base station carried in a downlink control information (DCI) through a control channel when the SL receiver UE is within the cell coverage, or receiving the deactivation grant from a SL transmitter (S1902) UE carried in a sidelink control information (SCI) through a SL control channel when the SL receiver UE is outside the cell coverage.

22. A method used by a base station to configure a resource pool for sidelink (SL) communication, the method comprising:
receiving an activation signal to activate a first resource of the resource pool for SL communication (S401);
transmitting an activation grant to allow performing SL communication (S402);
receiving a first deactivation signal to deactivate a second resource of the resource pool for SL communication (S406); and
transmitting a deactivation grant to allow terminating SL communication (S407);
**characterized by**
receiving a modification signal to modify from first resource to the second resource of the resource pool (S403);
determining whether to allow modifying from the first resource to the second resource in response to receiving the modification signal (S404); and
transmitting a modification grant to allow modifying from the first resource to the second resource (S405).

23. The method of claim 22, wherein receiving the activation signal comprising:
receiving the activation signal (S801) from a SL transmitter user equipment (UE) by using an interface via an activation indicator as a scheduling request (SR) carried in a shared channel.

24. The method of claim 23, wherein the interface is a physical layer interface.

25. The method of claim 22, wherein in response to receiving the activation signal, the method further comprising:
determining whether to allow to perform the SL communication in the first resource; and
transmitting an activation grant (S901) carried in a downlink control information (DCI) to a SL transmitter user equipment (UE) or a SL receiver UE through a control channel in response to allowing to perform the SL communication in the first resource.

26. The method of claim 22, wherein receiving the modification signal comprising:
receiving the modification signal (S1301) from a SL transmitter user equipment (UE) or a SL receiver UE via a modification indicator as a scheduling request (SR) carried in a shared channel.

27. The method of claim 26, further comprising:
determining whether to allow to modify from the first resource to the second resource of the resource pool; and
transmitting a modification grant (S1701) carried in a downlink control information (DCI) like (DCI_like) to a SL transmitter UE or a SL receiver UE through a control channel or a shared channel in response to allowing to modify from the first resource to the second resource of the resource pool.

28. The method of claim 22, wherein receiving the first deactivation signal comprising:
receiving the first deactivation signal (S1801) from a SL transmitter user equipment (UE) in a deactivation indicator for a buffer status report (BSR) carried in a shared channel.

29. The method of claim 28, further comprising:
determining whether to allow to terminate the SL communication in response to receiving the first deactivation signal; and
transmitting the deactivation grant (S1901, S1902) carried in a downlink control information (DCI) to a SL transmitter UE or a SL receiver UE through a control channel in response to allowing to terminate the SL communication.

30. A user equipment (UE) for sidelink (SL) transmission, comprising:
a transmitter circuit (502);
a receiver circuit (503); and
a processor (501) coupled to the transmitter circuit (502) and the receiver circuit (503) and configured to:
transmit, by using the transmitter circuit (502), a first activation signal to activate a first resource of a resource pool for SL communication;
receive, by using the receiver circuit (503), an activation grant to perform SL communication;
transmit, by using the transmitter circuit (502), a first deactivation signal to deactivate a second resource of the resource pool for SL communication; and
receive, by using the receiver circuit (503), a deactivation grant to terminate the SL communication;
**characterized by** the processor (501) further configured to:
determine to modify the resource pool by changing from the first resource to the second resource of the resource pool in response to detecting a triggering condition;
transmit, by using the transmitter circuit (502), a first modification signal to modify from first resource to the second resource; and
receive, by using the receiver circuit (503), a modification grant to modify from the first resource to the second resource.

31. A user equipment (UE) for sidelink (SL) reception, comprising:
a transmitter circuit (502);
a receiver circuit (503); and
a processor (501) coupled to the transmitter circuit (502) and the receiver circuit (503) and configured to:
receive, by using the receiver circuit (503), an activation grant to perform SL communication at a first resource of a resource pool; and
receive, by using the receiver circuit (503), a deactivation grant to terminate the SL communication at a second resource of the resource pool;
**characterized by** the processor (501) further configured to:
determine to modify the resource pool by changing from the first resource to the second resource of the resource pool in response to detecting a triggering condition;
transmit, by using the transmitter circuit (502), a first modification signal to modify from first resource to the second resource; and
receive, by using the receiver circuit (503), a modification grant to modify from the first resource to the second resource.

32. A base station, comprising:
a transmitter circuit (602);
a receiver circuit (603); and
a processor (601) coupled to the transmitter circuit (602) and the receiver circuit (603) and configured to:
receive, by using the receiver circuit (603), an activation signal to activate a first resource of a resource pool for SL communication;
transmit, by using the transmitter circuit (602), an activation grant to allow performing SL communication;
receive, by using the receiver circuit (603), a first deactivation signal to deactivate a second resource of the resource pool for SL communication; and
transmit, by using the transmitter circuit (602), a deactivation grant to allow terminating the SL communication;
**characterized by** the processor (601) further configured to:
receive, by using the receiver circuit (603), a modification signal to modify from first resource to the second resource of the resource pool;
determine whether to allow modifying from the first resource to the second resource in response to receiving the modification signal; and
transmit, by using the transmitter circuit (602), a modification grant to allow modifying from the first resource to the second resource.
